# FASCICULE DE BREVET EUROPEEN

(11) **EP 2 943 341 B1**
(45) Date de publication et mention de la délivrance du brevet: **25.07.2018**
(21) Numéro de dépôt: 14700131.7
(22) Date de dépôt: 07.01.2014
(51) Int. Cl.: B41F 33/00, B41F 33/02, B41F 13/56, B41F 19/00

(54) **PROCEDE DE COMMANDE POUR COMMANDER UNE MACHINE DE TRANSFORMATION, MACHINE DE TRANSFORMATION ET PROGRAMME D'ORDINATEUR POUR REALISER UN TEL PROCEDE DE COMMANDE**
VERFAHREN ZUR STEUERUNG EINER TRANSFORMATIONSMASCHINE, TRANSFORMATIONSMASCHINE UND COMPUTERPROGRAMM ZUR DURCHFÜHRUNG SOLCH EINES VERFAHRENS ZUR STEUERUNG
METHOD OF CONTROL FOR CONTROLLING A TRANSFORMATION MACHINE, TRANSFORMATION MACHINE AND COMPUTER PROGRAM FOR CARRYING OUT SUCH A METHOD OF CONTROL

(30) Priorité: 11.01.2013 FR 1350267
(43) Date de publication de la demande: 18.11.2015
(73) Titulaire: Bobst Lyon, 69100 Villeurbanne (FR)
(72) Inventeur: GAUVIN, Valérie, F-38540 St Just Chaleyssin (FR); RAVOT, Dominique, F-01800 Villieu-Loyes-Molon (FR)
(74) Mandataire: Ehnle, Marcus
(86) Numéro de dépôt international: PCT/EP2014/000008
(87) Numéro de publication internationale: WO 2014/108324

(56) Documents cités:
- EP-A1- 0 616 886
- EP-A1- 2 415 605

## Description

La présente invention concerne un procédé de commande d'une machine de transformation de type machine d'impression, machine de pliage ou machine de collage et destinée à agir sur des éléments en plaque, tels que des feuilles de carton. De plus, la présente invention concerne une machine de transformation destinée à être commandée suivant un tel procédé de commande. Par ailleurs, la présente invention concerne un programme d'ordinateur adapté pour être mémorisé dans une telle machine de transformation et pour réaliser les étapes d'un tel procédé de commande.

La présente invention peut s'appliquer au domaine de la transformation de feuilles de cartons pour former des conteneurs d'emballage. En particulier, la présente invention peut s'appliquer aux machines d'impression, de pliage et/ou de collage.

Dans la présente demande, le terme élément en plaque désigne un produit globalement plat composé d'au moins un matériau, tel que papier, carton ou polymère, adapté pour recevoir une couche d'impression et pour former des conteneurs d'emballage. Le terme élément en plaque désigne ainsi des feuilles de carton, du carton ondulé, du carton ondulé contrecollé, des cartons en plaque, du plastique flexible, tel que du polyéthylène (PE), du polyéthylène téréphtalate (PET), du polypropylène biorienté (BOPP).

### Etat de la technique

Le document EP 2 415 605 A1 décrit une station de commande d'une machine d'impression, la station de commande comprenant un dispositif combiné, incluant un écran tactile transparent superposé à un écran.A travers l'écran tactile transparent, une première zone de l'écran montre une image imprimée avec la machine d'impression. Dans une deuxième zone de l'écran, un espace coloré et un diagramme chromatique actuel dans cet espace coloré sont montrés pour un secteur choisi de l'état actuel de l'image imprimée dans la première zone. Un diagramme chromatique cible peut être sélectionné avec l'écran tactile. Une commande pour les unités de la machine d'impression est générée automatiquement permettant de modifier le diagramme chromatique actuel.

Le document EP 0616886 décrit une machine d'impression pour imprimer sur des feuilles de carton destinés à former des conteneurs. La machine de transformation comprend des organes de transformation, notamment cylindre porte-cliché et cylindre tramé, pour induire une transformation de chaque feuille de carton, en l'occurrence une impression par dépôt d'encre. Le cylindre porte-cliché et cylindre tramé fonctionnent suivant des paramètres réglables; en particulier, leurs axes peuvent être déplacés par des moteurs. De plus, la machine de transformation de comprend une interface graphique, un clavier de commande pour entrer des commandes, et une unité de traitement.

Suivant le procédé de commande de la machine de transformation, l'opérateur doit entrer plusieurs commandes distinctes pour agir sur plusieurs paramètres réglables qui influencent une même transformation.

Cependant, la machine de transformation fonctionne avec de nombreux paramètres réglables, typiquement quarante, dont les trois directions de déplacement, dans les deux sens, de chaque organe de transformation, lesquels peuvent influencer indépendamment sur une même transformation.

Par exemple, pour ajuster le contraste d'une couleur sur chaque élément en plaque, l'opérateur peut choisir de régler indépendamment onze paramètres, dans le sens d'une augmentation ou dans le sens d'une diminution, soit vingt-deux réglages possibles:
- la position spatiale du cylindre porte-cliché suivant trois axes;
- la position spatiale du cylindre tramé suivant trois axes;
- la position spatiale de l'organe de contrepression suivant trois axes;
- la vitesse de rotation du cylindre porte-cliché, et/ou
- la vitesse de rotation du cylindre tramé.

Pour agir sur ces multiples paramètres réglables, l'opérateur doit entrer successivement plusieurs commandes distinctes. L'opérateur doit donc nécessairement savoir comment chaque paramètre réglable influence la transformation à venir sur les éléments en plaque. En particulier, l'opérateur doit nécessairement anticiper les conséquences de chacun de ses réglages dans le sens d'une augmentation ou dans le sens d'une diminution.

Par conséquent, il est long et fastidieux de mettre en oeuvre un procédé de commande de l'art antérieur pour régler une machine de transformation de l'art antérieur. Typiquement, la durée de réglage pour faire varier une transformation est généralement supérieure à 10min.

En outre, un procédé de commande de l'art antérieur induit des risques élevés de commettre de nombreuses erreurs de réglage, en particulier dans le cas d'un opérateur insuffisamment expérimenté.

### Exposé de l'invention

La présente invention vise notamment à résoudre, totalement ou partiellement, les problèmes mentionnés ci-avant.

Cet objectif de l'invention est atteint par un procédé selon la revendication 1 et un dispositif selon la revendication 6. À cet effet, l'invention a pour objet un procédé de commande, pour commander une machine de transformation de type machine d'impression, machine de pliage ou machine de collage, destinée à agir sur des éléments en plaque, destinés à former des conteneurs, la machine de transformation comprenant au moins:
- des organes de transformation, tels qu'un cylindre porte-cliché ou un galet de pliage, chaque organe de transformation étant adapté pour réaliser au moins une action induisant, directement ou indirectement, une transformation de chaque élément en plaque, chaque organe de transformation étant configuré pour fonctionner suivant au moins un paramètre réglable, par exemple une position réglable;
- une interface graphique de commande, par exemple un écran tactile, configurée pour afficher des zones de commande de façon à permettre à un opérateur d'entrer individuellement des commandes; et
- une unité de traitement reliée à l'interface graphique de commande et aux organes de transformation;
le procédé comprenant:
- une étape d'affichage, dans laquelle l'interface graphique de commande affiche au moins une image représentant un élément en plaque ou un conteneur formé par un élément en plaque après pliage, et dans laquelle l'interface graphique de commande affiche des zones de commande qui sont superposées à ladite image et qui symbolisent respectivement des grandeurs caractéristiques des transformations à induire sur chaque élément en plaque, ces grandeurs caractéristiques comprenant par exemple le contraste d'une couleur imprimée ou la profondeur d'un pli; et
- une étape de réception, dans laquelle l'unité de traitement reçoit l'une des commandes entrée individuellement par l'opérateur en activant une zone de commande ; le procédé étant caractérisé en ce qu'il comprend:
   - une étape de commande, dans laquelle, en réponse à ladite commande entrée individuellement, l'unité de traitement génère au moins deux signaux de réglage respectifs corrélés par une loi de réglage prédéterminée de façon à régler au moins deux paramètres réglables respectifs, de sorte que les organes de transformation correspondants induisent un changement de ladite grandeur caractéristique.

En d'autres termes, dans l'étape d'affichage, l'interface graphique de commande affiche en fond d'écran un produit à transformer, i.e. un élément en plaque ou un produit transformé, i.e. un conteneur. Sur ce fond d'écran, chaque zone de commande comporte un idéogramme symbolisant la grandeur caractéristique à ajuster. Après que l'opérateur a activé une zone de commande, l'unité de traitement pilote des actionneurs en vue de changer la grandeur caractéristique dans le sens sélectionné par l'opérateur.

L'interface graphique de commande permet de minimiser la durée de réglage et la durée de formation d'un opérateur. En effet, elle montre directement à l'opérateur le produit à transformer, l'élément en plaque, et les grandeurs physiques à ajuster sur ce produit à transformer. Alors que dans un procédé de commande de l'art antérieur, l'interface graphique de commande représente la machine de transformation, ses organes de transformation et leurs axes de réglage, ce qui ne matérialise pas le produit à transformer.

Ainsi, un tel procédé de commande permet à un opérateur de régler une machine de transformation conforme à l'invention avec une durée de réglage considérablement diminuée, car l'opérateur dispose de réglages préenregistrés. Typiquement, grâce à l'invention, cette durée de réglage pour une transformation peut être d'environ 4min, voire moins, alors qu'un procédé de commande de l'art antérieur nécessitait une durée de réglage supérieure à 10min.

De plus, le procédé de commande peut être supervisé par un opérateur peu expérimenté et connaissant peu la machine de transformation, alors qu'un procédé de commande de l'art antérieur nécessitait un opérateur très expérimenté et connaissant bien la machine de transformation. Par ailleurs, le risque d'erreurs de réglage est limité voire annulé.

Dans la présente demande, le terme transformation ou une de ses variations désigne un changement physique intervenu sur un élément en plaque, par exemple l'ajout d'une couche d'encre formant un motif, la formation d'un pli, la découpe d'une fente etc. Une telle transformation d'un élément en plaque n'implique pas nécessairement un changement physique de grande amplitude. En d'autres termes, un opérateur peut mesurer, et parfois voir, au moins une différence entre un élément en plaque après cette transformation et ce même élément en plaque avant cette transformation.

Par exemple, le cylindre porte-cliché réalise une action induisant directement une transformation, à savoir le dépôt d'une couche d'encre sur chaque élément en plaque. Inversement, le cylindre tramé réalise une action induisant indirectement une transformation, à savoir transférer une quantité d'encre au cylindre porte-cliché. Plus généralement, les organes de transformation en contact avec les éléments en plaque, comme le cylindre porte-cliché, induisent directement une transformation des éléments en plaque. Inversement, les organes de transformation distants des éléments en plaque induisent indirectement une transformation des éléments en plaque, comme le cylindre tramé.

Dans la présente demande, le terme zone de commande désigne une portion de l'interface graphique de commande qui est activable, c'est-à-dire sur laquelle l'opérateur peut agir pour entrer individuellement la commande souhaitée.

Dans la présente demande, le terme relier et ses variations désignent une liaison permettant l'émission et/ou la réception d'au moins un signal transmis entre deux composants. Cette liaison peut être réalisée par câble électrique, par ondes électromagnétiques ou par tout autre moyen équivalent.

Dans le procédé de commande conforme à l'invention, les paramètres réglables corrélés par une loi de réglage prédéterminée sont réglés concomitamment, c'est-à-dire ensemble, et de manière simultanée ou successive. En d'autres termes, une même loi de réglage prédéterminée induit concomitamment des variations de chacun des paramètres réglables concernés, que ces variations soient simultanées ou successives.

Selon un mode de réalisation de l'invention, les organes de transformation comprennent:
- un cylindre porte-cliché monté rotatif, adapté pour porter un cliché et agencé pour faire rouler le cliché sur chaque élément en plaque de façon à y déposer une quantité d'encre suivant un motif défini sur le cliché;
- un cylindre tramé agencé parallèlement au cylindre porte-cliché de façon à recevoir la quantité d'encre depuis un réservoir d'encre et à transférer la quantité d'encre au cylindre porte-cliché par contact avec le cylindre porte-cliché; et
- un organe de contrepression agencé parallèlement au cylindre porte-cliché de façon à exercer des efforts de pression sur chaque élément en plaque roulant sur le cylindre porte-cliché;

et l'unité de traitement génère au moins deux signaux de réglage corrélés par une loi dite de contraste, en tant que loi de réglage prédéterminée, destinée à ajuster la quantité d'encre déposée sur chaque élément en plaque, les paramètres réglables étant sélectionnés dans le groupe constitué par la distance entre le cylindre porte-cliché et le cylindre tramé, la distance entre le cylindre porte-cliché et l'organe de contrepression, la vitesse de rotation du cylindre porte-cliché, ainsi que la vitesse de rotation du cylindre tramé.

Ainsi, de tels signaux de réglage permettent de régler rapidement et simplement la quantité d'encre déposée sur chaque élément en plaque, donc le contraste d'une couleur.

Selon un mode de réalisation de l'invention, les organes de transformation comprennent:
- des galets de pliage agencés pour former au moins un pli sur chaque élément en plaque;
- au moins un support de galets adapté pour supporter les galets de pliage; et
- un membre de contrepression agencé pour exercer des efforts de pression sur chaque élément en plaque dans un sens opposé aux efforts exercés par les galets de pliage;
et l'unité de traitement génère au moins deux signaux de réglage corrélés par une loi dite de pliage destinée à ajuster la profondeur d'un pli sur chaque élément en plaque, les paramètres réglables étant sélectionnés dans le groupe constitué par le serrage des galets de pliage sur le pli de façon à maintenir le conteneur à l'état plié, la position du support de galets et la distance entre le support de galets et le membre de contrepression.

Ainsi, de tels signaux de réglage permettent de régler rapidement et simplement la profondeur d'un pli et la perpendicularité de ce dernier sur chaque élément en plaque.

Selon un mode de réalisation de l'invention, le procédé de commande comprend en outre une étape de reconfiguration dans laquelle un opérateur met en oeuvre des moyens de configuration de façon à reconfigurer au moins une loi de réglage prédéterminée.

Ainsi, une telle étape de reconfiguration permet d'affiner chaque loi de réglage prédéterminée, de façon à minimiser la durée de réglage et à maximiser la qualité du produit transformé.

Selon un mode de réalisation de l'invention, la machine de transformation comprend en outre un dispositif de transport adapté pour transporter les éléments en plaque successivement vers chaque organe de transformation, de sorte que chaque organe de transformation peut réaliser ladite au moins une action, le procédé de commande comprenant en outre une étape préalable d'arrêt dans laquelle le dispositif de transport est arrêté avant de mettre en oeuvre l'étape dans laquelle l'unité de traitement génère des signaux de réglage.

En d'autres termes, les réglages sont faits entre deux séries d'éléments en plaque. Ainsi, une telle étape préalable d'arrêt permet de tester les réglages avant de redémarrer la production d'une série.

Alternativement à cette variante, l'étape dans laquelle l'unité de traitement génère des signaux de réglage peut être mise en oeuvre sans étape préalable d'arrêt. Ainsi, la durée de réglage ne ralentit pas la production, car les réglages sont faits en ligne, en cours de production.

De plus, la présente invention a pour objet une machine de transformation, de type machine d'impression, ou par exemple machine de pliage ou machine de collage, destinée à agir sur des éléments en plaque, destinés à former des conteneurs, la machine de transformation comprenant au moins:
- des organes de transformation, tels qu'un cylindre porte-cliché ou un galet de pliage, chaque organe de transformation étant adapté pour réaliser au moins une action induisant, directement ou indirectement, une transformation de chaque élément en plaque, chaque organe de transformation étant configuré pour fonctionner suivant au moins un paramètre réglable, par exemple une position réglable;
- une interface graphique de commande, par exemple un écran tactile, configurée pour afficher au moins une image représentant un élément en plaque ou un conteneur formé par un élément en plaque après pliage, et configurée pour afficher des zones de commande qui sont superposées à ladite image et qui symbolisent respectivement des grandeurs caractéristiques des transformations à induire sur chaque élément en plaque, ces grandeurs caractéristiques comprenant par exemple le contraste d'une couleur imprimée ou la profondeur d'un pli; et
- une unité de traitement reliée à l'interface graphique de commande et aux organes de transformation;
la machine de transformation étant caractérisée en ce que l'unité de traitement est programmée pour générer, en réponse à une commande entrée individuellement par l'opérateur, au moins deux signaux de réglage respectifs corrélés par une loi de réglage prédéterminée, de façon à régler au moins deux paramètres réglables respectifs, de sorte que les organes de transformation correspondants induisent un changement de ladite grandeur caractéristique.

Ainsi, une telle machine de transformation permet de diminuer considérablement la durée de réglage, car l'opérateur dispose de réglages préenregistrés. Typiquement, grâce à l'invention, cette durée de réglage pour influencer une transformation peut être d'environ 4min, voire moins, alors qu'un procédé de commande de l'art antérieur nécessitait une durée de réglage supérieure à 10min.

De plus, cette machine de transformation peut être commandée par un opérateur peu expérimenté et connaissant peu la machine de transformation, alors qu'une machine de transformation de l'art antérieur nécessitait un opérateur très expérimenté et connaissant bien la machine de transformation. Par ailleurs, le risque d'erreurs de réglage est limité voire annulé.

Selon un mode de réalisation de l'invention, l'interface graphique de commande comprend un écran tactile adapté pour transmettre à l'unité de traitement une commande entrée individuellement par un appui d'un opérateur sur une zone de commande de l'écran tactile.

Ainsi, un tel écran tactile forme une interface graphique de commande ergonomique et compacte.

Alternativement à ce mode de réalisation, l'interface graphique de commande comprend un écran et un dispositif de pointage de type souris.

Selon un mode de réalisation de l'invention, la machine de transformation comprend en outre des actionneurs de réglage, chaque actionneur de réglage étant adapté pour régler au moins un paramètre réglable en réponse à un desdits signaux de réglage.

Ces actionneurs de réglage comprennent par exemple des moteurs pour déplacer le cylindre porte-cliché, le cylindre tramé ou l'organe de contrepression suivant trois axes, ou encore les actionneurs entraînant en rotation le cylindre porte-cliché ou le cylindre tramé.

Selon un mode de réalisation de l'invention, l'unité de traitement est configurée pour mémoriser plusieurs lois de réglage prédéterminées, de façon à régler plusieurs paramètres réglables respectifs, en particulier des paramètres réglables influençant diverses transformations, telles que le contraste d'une couleur, l'emplacement d'un motif de couleur sur l'élément en plaque, la profondeur d'un pli, l'emplacement des découpes, la taille des éléments en plaque, la qualité de pliage.

Ainsi, une telle unité de traitement permet d'ajuster sélectivement plusieurs transformations différentes, voire toutes les transformations réalisées par les organes de transformation, ce qui facilite la commande de la machine de transformation. Les lois de réglages prédéterminées sont établies à l'aide de plans d'expérience menés de préférence chez le fabricant de la machine de transformation afin de déterminer expérimentalement les équations régissant le résultat à obtenir sur le conteneur fini. Ainsi, ces lois de réglages prédéterminées peuvent être établies en effectuant relativement peu de tests.

Par ailleurs, la présente invention a pour objet un programme d'ordinateur adapté pour être mémorisé dans une unité de traitement d'une machine de transformation selon l'invention, le programme d'ordinateur comprenant des instructions codées qui, lorsque le programme d'ordinateur est exécuté par l'unité de traitement, réalise les étapes du procédé de commande selon l'invention.

Ainsi, un tel programme d'ordinateur permet de piloter une machine de transformation conforme à l'invention suivant un procédé de commande conforme à l'invention.

Les modes de réalisation mentionnés ci-avant peuvent être pris isolément ou selon toute combinaison techniquement admissible.

### Brève description des dessins

La présente invention sera bien comprise et ses avantages ressortiront aussi à la lumière de la description qui va suivre, donnée uniquement à titre d'exemple non limitatif et faite en référence aux dessins annexés, dans lesquels:
- la Figure 1 est une vue schématique d'une machine de transformation conforme à l'invention;
- la Figure 2 est une vue schématique à plus grande échelle du détail II à la Figure 1;
- la Figure 3 est une vue d'une interface graphique de commande appartenant à la machine de transformation de la Figure 1, au cours d'une étape d'affichage d'un procédé conforme à l'invention;
- la Figure 4 est une vue similaire à la Figure 3, au cours de l'étape d'affichage; et
- la Figure 5 est un organigramme illustrant un procédé conforme à l'invention pour commander la machine de transformation de la Figure 1.

### Exposé détaillé des modes de réalisation préférés

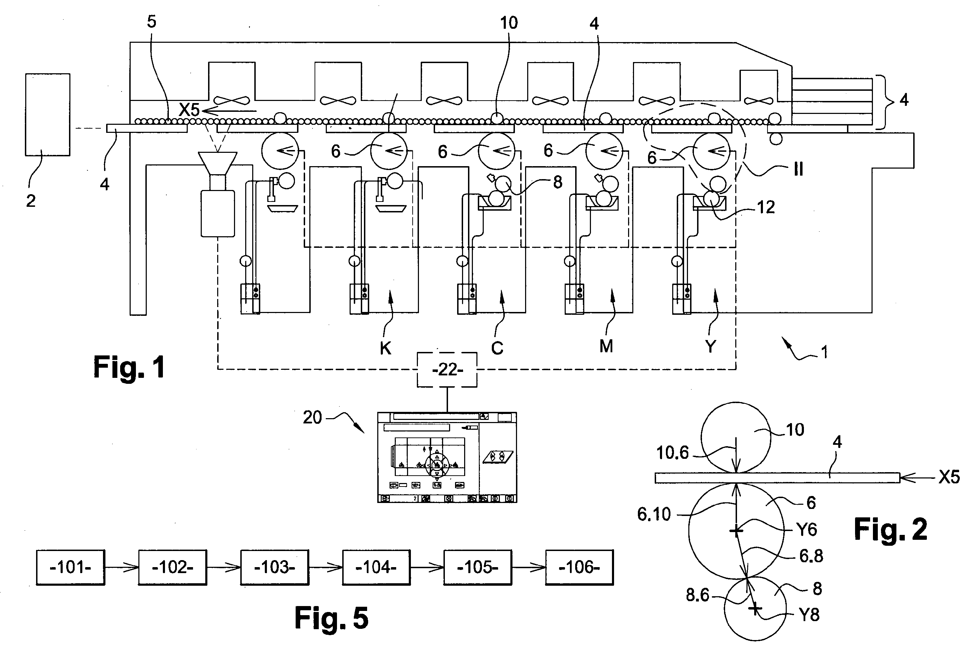

La Fig. 1 illustre une machine d'impression 1. De plus, la Fig. 1 symbolise une machine de pliage 2. La machine d'impression 1 et la machine de pliage 2 forment des machines de transformation destinées à agir sur des feuilles de carton 4 ou autres éléments en plaque destinés à former des conteneurs non représentés.

La machine d'impression 1 comprend un dispositif de transport 5 qui est destiné à transporter les feuilles de carton 4 suivant une direction de transport X5 dans la machine d'impression 1, puis dans la machine de pliage 2.

La machine d'impression 1 comprend des organes de transformation adaptés pour réaliser chacun au moins une action induisant, directement ou indirectement, une transformation de chaque feuille de carton 4. En particulier, la machine d'impression 1 comprend les organes de transformation suivants: des cylindres porte-cliché 6, des cylindres tramés 8 et des organes de contrepression 10.

La machine d'impression 1 est adaptée pour réaliser des impressions quadrichromiques sur chaque feuille de carton, c'est-à-dire pour y déposer successivement:
- une couche d'encre jaune dans une partie Y,
- une couche d'encre rouge dans une partie M,
- une couche d'encre bleue dans une partie C, et/ou
- une couche d'encre noire dans une partie K.

À cet effet, comme le montre la Fig. 2, la machine d'impression 1 comprend, pour chaque couleur, un ensemble d'impression comportant au moins un cylindre porte-cliché 6, un cylindre tramé 8 et un organe de contrepression 10.

Chaque cylindre porte-cliché 6 est monté rotatif autour d'un axe respectif Y6. Chaque cylindre porte-cliché 6 est adapté pour porter un cliché non représenté. Chaque cylindre porte-cliché 6 est agencé pour faire rouler le cliché sur chaque feuille de carton 4 de façon à y déposer une quantité d'encre suivant un motif défini sur le cliché.

Chaque cylindre tramé 8 s'étend suivant un axe Y8 qui est parallèle à l'axe Y6 d'un cylindre porte-cliché respectif 6. Les axes Y6 et Y8 sont perpendiculaires à la direction de transport X5. Chaque cylindre tramé 8 est agencé près d'un cylindre porte-cliché respectif 6 de façon à recevoir la quantité d'encre depuis un réservoir d'encre 12 et à transférer la quantité d'encre au cylindre porte-cliché 6 par contact avec le cylindre porte-cliché 6.

Chaque organe de contrepression 10 a ici une forme globalement cylindrique agencée parallèlement au cylindre porte-cliché respectif 6, de façon à exercer des efforts de pression sur chaque feuille de carton 4 roulant sur le cylindre porte-cliché 6. Ces efforts de pression permettent de déposer une couche d'encre sur la feuille de carton 4.

De même, la machine de pliage 2 comprend les organes de transformation suivants non représentés: des galets de pliage, des supports de galets et des membres de contrepression. Chaque galet de pliage est agencé pour former un pli sur chaque feuille de carton 4. Chaque support de galets est adapté pour supporter les galets de pliage. Chaque membre de contrepression est agencé pour exercer des efforts de pression sur chaque feuille de carton dans un sens opposé aux efforts exercés par les galets de pliage.

Le dispositif de transport 5 est adapté pour transporter les feuilles de carton 4 successivement vers chaque organe de transformation, de sorte que chaque organe de transformation peut réaliser une ou des actions induisant, directement ou indirectement, une transformation de chaque feuille de carton 4.

Dans la machine d'impression 1, chaque organe de transformation est configuré pour fonctionner suivant un ou plusieurs paramètres réglables.

Par exemple, un cylindre porte-cliché 6, un cylindre tramé 8 et un organe de contrepression 10 sont configurés pour fonctionner suivant les paramètres réglables sélectionnés dans le groupe constitué par:
- la distance 6.8-8.6 entre le cylindre porte-cliché 6 et le cylindre tramé 8; à la Fig. 2, les flèches 6.8 et 8.6 illustrent ce paramètre réglable;
- la distance 6.10-10.6 entre le cylindre porte-cliché 6 et l'organe de contrepression 10; à la Fig. 2, les flèches 6.10 et 10.6 illustrent ce paramètre réglable;
- la vitesse de rotation du cylindre porte-cliché 6; et
- la vitesse de rotation du cylindre tramé 8.

De même, dans la machine de pliage 2, chaque organe de transformation est configuré pour fonctionner avec des paramètres réglables sélectionnés dans le groupe constitué par le serrage des galets de pliage sur le pli de façon à maintenir le conteneur à l'état plié, la position du support de galets et la distance entre le support de galets et le membre de contrepression. Le serrage des galets de pliage sert à maintenir l'élément en plaque jusqu'à la réception de l'élément en plaque, i.e. le conteneur plié, dans le but d'assurer la qualité et répétitivité du pliage.

La machine d'impression 1 ou la machine de pliage 2 comprend en outre des actionneurs de réglage non représentés. Chaque actionneur de réglage est adapté pour régler au moins un de ces paramètres réglables. Par exemple, un actionneur de réglage peut être formé par un moteur adapté pour déplacer un cylindre porte-cliché 6 ou un cylindre tramé suivant deux ou trois directions orthogonales.

De plus, comme le montre la Fig. 1, la machine d'impression 1 comprend une interface graphique de commande 20 et une unité de traitement 22. L'unité de traitement 22 est reliée à l'interface graphique de commande et aux organes de transformation, dont chaque cylindre porte-cliché 6, chaque cylindre tramé 8 et chaque organe de contrepression 10.

Ces liaisons à l'unité de traitement 22 sont symbolisées à la Fig. 1 par des tirets.

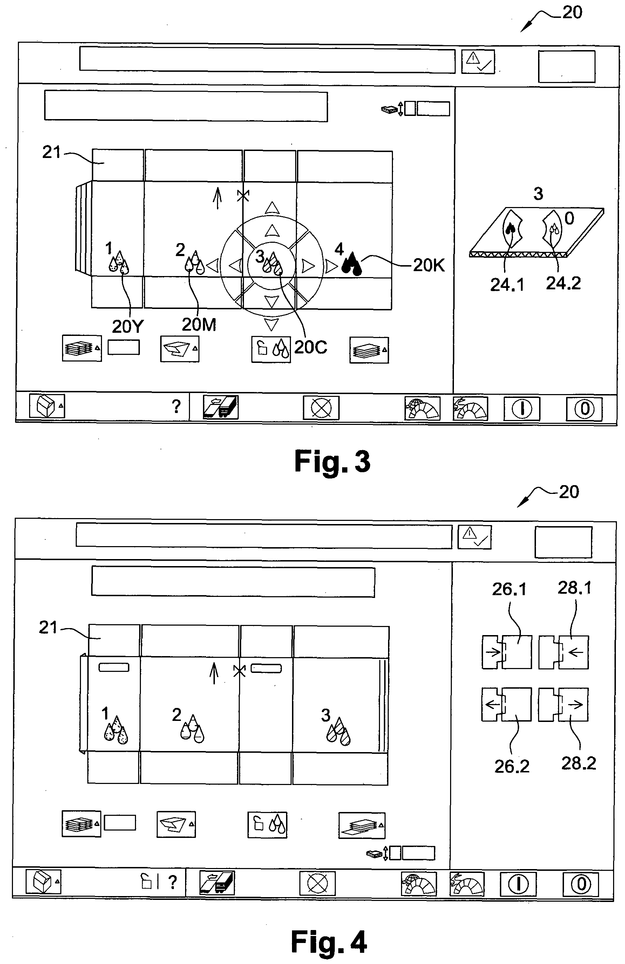

Comme le montrent les Figs. 3 et 4, l'interface graphique de commande 20 comprend ici un écran tactile qui est adapté pour transmettre à l'unité de traitement 22 une commande entrée individuellement par un appui d'un opérateur sur une zone de commande de l'écran tactile.

L'interface graphique de commande 20 est configurée pour afficher au moins une image 21 représentant une feuille de carton 4.

Alternativement ou dans un menu différent, l'interface graphique de commande peut être configurée pour afficher un conteneur formé par une feuille de carton après pliage.

De plus, l'interface graphique de commande 20 est configurée pour afficher des zones de commande qui sont superposées à l'image 21 et qui symbolisent respectivement des grandeurs caractéristiques des transformations à induire sur chaque feuille de carton 4, ces grandeurs caractéristiques comprenant par exemple le contraste d'une couleur imprimée ou la profondeur d'un pli, comme cela est décrit ci-après.

Dans l'exemple de la Fig. 3, l'interface graphique de commande 20 affiche notamment la gestion de chaque couleur avec:
- une zone de commande 24.1, sur laquelle l'opérateur peut entrer individuellement, par un simple appui, une commande destinée à diminuer d'un décrément la quantité d'encre bleue déposée sur chaque feuille de carton 4, ce qui permet d'ajuster le contraste du bleu;
- une zone de commande 24.2, sur laquelle l'opérateur peut entrer individuellement, par un simple appui, une commande destinée à augmenter d'un incrément la quantité d'encre déposée sur chaque feuille de carton 4, ce qui permet d'ajuster le contraste du bleu;
- une zone de commande 20C, qui est présentement activée et qui donne accès aux zones de commande 24.1 et 24.2;
- une zone de commande 20M, que l'opérateur peut activer pour accéder à des zones de commande contextuelles qui sont identiques aux zones de commande 24.1 et 24.2, afin d'ajuster le contraste du rouge;
- une zone de commande 20Y, que l'opérateur peut activer pour accéder à des zones de commande contextuelles qui sont identiques aux zones de commande 24.1 et 24.2, afin d'ajuster le contraste du jaune; et
- une zone de commande 20K, que l'opérateur peut activer pour accéder à des zones de commande contextuelles qui sont identiques aux zones de commande 24.1 et 24.2, afin d'ajuster le contraste du noir.

Dans l'exemple de la Fig. 4, l'interface graphique de commande 20 affiche notamment des zones de commande de maintien du pli, soit en resserrant le pli soit en l'écartant, avec:
- une zone de commande 26.1, carton plié trop ouvert, sur laquelle l'opérateur peut entrer individuellement, par un simple appui, une commande destinée à décaler d'un décrément vers la droite la position du support de galets, donc la distance entre le support de galets et le membre de contrepression, afin d'ajuster la profondeur d'un pli dans chaque feuille de carton 4;
- une zone de commande 26.2, carton plié trop fermé, sur laquelle l'opérateur peut entrer individuellement, par un simple appui, une commande destinée à décaler d'un décrément vers la gauche la position du support de galets, donc la distance entre le support de galets et le membre de contrepression, afin d'ajuster la profondeur d'un pli dans chaque feuille de carton 4;
- une zone de commande 28.1, carton plié trop ouvert, sur laquelle l'opérateur peut entrer individuellement, par un simple appui, une commande destinée à décaler d'un décrément vers la droite le serrage des galets, afin d'ajuster la profondeur d'un pli dans chaque feuille de carton 4; et
- une zone de commande 28.2, carton plié trop fermé, sur laquelle l'opérateur peut entrer individuellement, par un simple appui, une commande destinée à décaler d'un décrément vers la gauche le serrage des galets, afin d'ajuster la profondeur d'un pli dans chaque feuille de carton 4.

En d'autres termes, l'interface graphique de commande 20 est configurée pour afficher en fond d'écran une feuille de carton 4 en tant que produit à transformer. Sur ce fond d'écran, chaque zone de commande 24.1, 24.2, 20C est un bouton qui comporte un idéogramme symbolisant la grandeur caractéristique à ajuster: contraste, profondeur d'un pli etc.

L'interface graphique de commande 20 permet de minimiser la durée de réglage et la durée de formation d'un opérateur. En effet, elle montre directement à l'opérateur le produit à transformer, i.e. la feuille de carton 4, et les grandeurs physiques à ajuster sur ce produit à transformer.

La Fig. 5 illustre un procédé de commande conforme à l'invention, pour commander la machine d'impression 1. Ce procédé de commande comprend:
- une étape d'affichage 102, dans laquelle l'interface graphique de commande 20 affiche l'image 21 représentant une feuille de carton 4, et dans laquelle l'interface graphique de commande 20 affiche des zones de commande 24.1, 24.2, 20C etc. qui sont superposées à l'image 21 et qui symbolisent respectivement des grandeurs caractéristiques des transformations à induire sur chaque feuille de carton 4, ces grandeurs caractéristiques comprenant par exemple le contraste d'une couleur imprimée ou la profondeur d'un pli;
- une étape de réception 103, dans laquelle l'unité de traitement 22 reçoit l'une des commandes entrée individuellement par l'opérateur en activant une zone de commande 24.1, 24.2, 20C etc.; et
- une étape de commande 104, dans laquelle, en réponse à cette commande entrée individuellement, l'unité de traitement 22 génère des signaux de réglage respectifs corrélés par une loi de réglage prédéterminée de façon à régler les paramètres réglables respectifs, de sorte que les organes de transformation correspondants réalisent des actions induisant un changement de cette grandeur caractéristique lors de la transformation, contraste d'impression ou profondeur de pli.

Dans l'exemple de la Fig. 3, la grandeur caractéristique à changer est la quantité d'encre bleue, donc le contraste de bleu. Les organes de transformation correspondants sont le cylindre porte-cliché 6, le cylindre tramé 8 et l'organe de contrepression 10. La loi de réglage prédéterminée est une loi de contraste. Les signaux de réglage respectifs permettent de régler, selon cette loi de contraste, toute ou partie des paramètres réglables correspondants, dont notamment:
- la distance 6.8-8.6 entre le cylindre porte-cliché 6 et le cylindre tramé 8; à la Fig. 2, les flèches 6.8 et 8.6 illustrent ce paramètre réglable;
- la distance 6.10-10.6 entre le cylindre porte-cliché 6 et l'organe de contrepression 10; à la Fig. 2, les flèches 6.10 et 10.6 illustrent ce paramètre réglable;
- la vitesse de rotation du cylindre porte-cliché 6; et
- la vitesse de rotation du cylindre tramé 8.

En poursuivant cet exemple de la Fig. 3, avant l'étape de commande 104, la distance initiale 6.8-8.6 entre cylindre porte-cliché 6 et cylindre tramé 8 vaut l'épaisseur de la feuille de carton moins 0,2mm; et la distance initiale 6.10-10.6 entre cylindre porte-cliché 6 et organe de contrepression 10 vaut l'épaisseur de la feuille de carton moins 0,5mm.

Lorsque l'opérateur appuie sur la zone de commande 24.2, après l'étape de commande 104, pour assombrir la couleur bleue, la loi de contraste associée (étape de commande 104) corrèle deux signaux de réglages de façon à diminuer de 0,05mm la distance 6.8-8.6 et à diminuer de 0,10mm la distance 6.10-10.6. Les multiples essais menés lors du développement de la présente invention ont montré que ces réglages de ces paramètres réglables permettent d'obtenir la qualité et le contraste d'impression voulus pour au moins 80% des configurations de production; seules des productions spéciales avec matériau et encre différents nécessiteraient des réglages différents.

Dans l'exemple de la Fig. 4, la grandeur caractéristique à changer est la profondeur d'un pli. Les organes de transformation correspondants sont les galets de pliage, le support de galets et le membre de contrepression. La loi de réglage prédéterminée est une loi de pliage. Les signaux de réglage respectifs permettent de régler, selon la loi de pliage, toute ou partie des paramètres réglables correspondants, dont notamment: le serrage des galets de pliage sur le pli du conteneur de façon à maintenir le conteneur à l'état plié, la position du support de galets et la distance entre le support de galets et le membre de contrepression.

En poursuivant cet exemple de la Fig. 4, avant l'étape de commande 104, si le carton plié est trop ouvert ou trop fermé, l'opérateur active sélectivement une des zones de commande 26.1, 26.2, 28.1 et 28.2.

Après l'étape de commande 104, une loi de pliage associée corrèle deux signaux de réglages de façon à déplacer le support de galets, à droite ou à gauche, de 0,5mm et de façon à resserrer ou desserrer les galets de 0,5mm.

Les multiples essais menés lors du développement de la présente invention ont montré que ces réglages de ces paramètres réglables permettent d'obtenir la profondeur de pli voulue pour au moins 80% des configurations de production; seules des productions spéciales, avec matériau différent, nécessiteraient des réglages différents.

Dans l'exemple des Figs., l'unité de traitement 22 est configurée pour mémoriser plusieurs lois de réglage prédéterminées, de façon à régler plusieurs paramètres réglables respectifs, en particulier des paramètres réglables influençant le contraste des couleurs jaune, rouge, bleue et noire, l'emplacement d'un motif de couleur sur chaque feuille de carton 4, la profondeur d'un pli, l'emplacement des découpes, la taille des éléments en plaque, la qualité de pliage. ,

Ensuite, lors d'une étape de réglage 105, des actionneurs de réglage reçoivent ces signaux de réglage respectifs émis par l'unité de traitement 22 et agissent conséquemment sur les organes de transformation concernés. Ces actionneurs de réglage comprennent par exemple des moteurs pour déplacer le cylindre porte-cliché 6, le cylindre tramé 8 ou l'organe de contrepression 10 suivant trois axes, ou encore les actionneurs entraînant en rotation le cylindre porte-cliché ou le cylindre tramé.

Ainsi, un tel procédé de commande permet à un opérateur de régler la machine d'impression 1 ou la machine de pliage 2 en une durée de réglage très courte, typiquement d'environ 4min, car l'opérateur dispose de réglages préenregistrés. De plus, le procédé de commande peut être supervisé par un opérateur peu expérimenté et connaissant peu la machine d'impression 1 ou la machine de pliage.

Dans l'exemple de la Fig. 5, le procédé de commande comprend en outre une étape préalable d'arrêt 101, dans laquelle le dispositif de transport 5 est arrêté avant de mettre en oeuvre l'étape de commande 104 dans laquelle l'unité de traitement 22 génère des signaux de réglage. Les réglages sont donc faits entre deux séries de feuilles de carton 4. Ainsi, une telle étape préalable d'arrêt 101 permet de tester les réglages avant de redémarrer la production d'une série.

Dans l'exemple de la Fig. 5, le procédé de commande comprend en outre une étape de reconfiguration 106, dans laquelle un opérateur peut, si nécessaire, mettre en oeuvre des moyens de configuration non représentés de façon à reconfigurer au moins une loi de réglage prédéterminée.

Ainsi, l'opérateur peut affiner chaque loi de réglage prédéterminée, de façon à minimiser la durée de réglage et à maximiser la qualité du produit transformé.

Afin de réaliser l'étape de commande 104, l'unité de traitement 22 a été préalablement programmée pour générer, en réponse à une commande entrée individuellement par l'opérateur, au moins deux signaux de réglage corrélés par une loi dite de contraste, en tant que loi de réglage prédéterminée, destinée à régler la quantité d'encre déposée sur chaque feuille de carton 4, les signaux de réglage étant sélectionnés dans le groupe constitué par:
- la distance 6.8-8.6 entre le cylindre porte-cliché 6 et le cylindre tramé 8; à la Fig. 2, les flèches 6.8 et 8.6 illustrent ce paramètre réglable;
- la distance 6.10-10.6 entre le cylindre porte-cliché 6 et l'organe de contrepression 10; à la Fig. 2, les flèches 6.10 et 10.6 illustrent ce paramètre réglable;
- la vitesse de rotation du cylindre porte-cliché 6; et
- la vitesse de rotation du cylindre tramé 8.

À cet effet, un programme d'ordinateur est mémorisé dans l'unité de traitement 22. Ce programme d'ordinateur comprend des instructions codées qui, lorsque le programme d'ordinateur est exécuté par l'unité de traitement 22, réalise les étapes du procédé de commande.

## Revendications

1. Procédé de commande, pour commander une machine de transformation, destinée à agir sur des éléments en plaque (4) destinés à former des conteneurs, la machine de transformation comprenant au moins:
- des organes de transformation, adaptés pour réaliser au moins une action induisant, directement ou indirectement, une transformation de chaque élément en plaque (4), chaque organe de transformation étant configuré pour fonctionner suivant au moins un paramètre réglable;
- une interface graphique de commande (20), configurée pour afficher des zones de commande (24.1, 24.2, 26.1, 26.2, 28.1, 28.2) de façon à permettre à un opérateur d'entrer individuellement des commandes; et
- une unité de traitement (22) reliée à l'interface graphique de commande (20) et aux organes de transformation;
le procédé comprenant:
- une étape d'affichage (102), dans laquelle l'interface graphique de commande (20) affiche au moins une image (21) représentant un élément en plaque (4) ou un conteneur formé par un élément en plaque, et des zones de commande (24.1, 24.2, 26.1, 26.2, 28.1, 28.2) qui sont superposées à l'image (21) et qui symbolisent respectivement des grandeurs caractéristiques des transformations à induire sur chaque élément en plaque (4); et
- une étape de réception (103), dans laquelle l'unité de traitement (22) reçoit l'une des commandes entrée individuellement par l'opérateur en activant une zone de commande (24.1, 24.2, 26.1, 26.2, 28.1, 28.2);
**caractérisé en ce qu'**il comprend:
- une étape de commande (104), dans laquelle, en réponse à la commande entrée individuellement, l'unité de traitement (22) génère au moins deux signaux de réglage respectifs corrélés par une loi de réglage prédéterminée de façon à régler au moins deux paramètres réglables respectifs, de sorte que les organes de transformation correspondants induisent un changement de la grandeur caractéristique.

2. Procédé selon la revendication 1, dans lequel les organes de transformation comprennent:
- un cylindre porte-cliché (6) monté rotatif, adapté pour porter un cliché et agencé pour faire rouler le cliché sur chaque élément en plaque (4) de façon à y déposer une quantité d'encre suivant un motif défini sur le cliché;
- un cylindre tramé (8) agencé parallèlement au cylindre porte-cliché (6) de façon à recevoir la quantité d'encre depuis un réservoir d'encre (12) et à transférer la quantité d'encre au cylindre porte-cliché (6) par contact avec le cylindre porte-cliché (6); et
- un organe de contrepression (10) agencé parallèlement au cylindre porte-cliché (6) de façon à exercer des efforts de pression sur chaque élément en plaque (4) roulant sur le cylindre porte-cliché (6);
et dans lequel l'unité de traitement (22) génère au moins deux signaux de réglage corrélés par une loi de contraste, en tant que loi de réglage prédéterminée, destinée à ajuster la quantité d'encre déposée sur chaque élément en plaque, les paramètres réglables étant sélectionnés dans le groupe constitué par la distance entre le cylindre porte-cliché (6) et le cylindre tramé (8), la distance entre le cylindre porte-cliché (6) et l'organe de contrepression (10), la vitesse de rotation du cylindre porte-cliché (6), ainsi que la vitesse de rotation du cylindre tramé (8).

3. Procédé selon l'une des revendications précédentes, dans lequel les organes de transformation comprennent:
- des galets de pliage agencés pour former au moins un pli sur chaque élément en plaque;
- au moins un support de galets adapté pour supporter les galets de pliage; et
- un membre de contrepression agencé pour exercer des efforts de pression sur chaque élément en plaque dans un sens opposé aux efforts exercés par les galets de pliage;
et dans lequel l'unité de traitement (22) génère au moins deux signaux de réglage corrélés par une loi de pliage destinée à ajuster la profondeur d'un pli sur chaque élément en plaque, les paramètres réglables étant sélectionnés dans le groupe constitué par le serrage des galets de pliage sur le pli de façon à maintenir le conteneur à l'état plié, la position du support de galets et la distance entre le support de galets et le membre de contrepression.

4. Procédé selon l'une des revendications précédentes, comprenant en outre une étape de reconfiguration (106) dans laquelle un opérateur met en oeuvre des moyens de configuration de façon à reconfigurer au moins une loi de réglage prédéterminée.

5. Procédé selon l'une des revendications précédentes, dans lequel la machine de transformation comprend en outre un dispositif de transport (5) adapté pour transporter les éléments en plaque (4) successivement vers chaque organe de transformation, de sorte que chaque organe de transformation peut réaliser l'action, le procédé de commande comprenant en outre une étape préalable d'arrêt (101) dans laquelle le dispositif de transport (5) est arrêté avant de mettre en oeuvre l'étape dans laquelle l'unité de traitement (22) génère des signaux de réglage.

6. Machine de transformation, de type machine d'impression (1), destinée à agir sur des éléments en plaque (4) destinés à former des conteneurs, la machine de transformation comprenant au moins:
- des organes de transformation, chaque organe de transformation étant adapté pour réaliser au moins une action induisant, directement ou indirectement, une transformation de chaque élément en plaque (4), chaque organe de transformation étant configuré pour fonctionner suivant au moins un paramètre réglable;
- une interface graphique de commande (20), configurée pour afficher au moins une image (21) représentant un élément en plaque (4) ou un conteneur formé par un élément en plaque (4), et configurée pour afficher des zones de commande (24.1, 24.2, 26.1, 26.2, 28.1, 28.2) qui sont superposées à l'image (21) et qui symbolisent respectivement des grandeurs caractéristiques des transformations à induire sur chaque élément en plaque (4); et
- une unité de traitement (22) reliée à l'interface graphique de commande (20) et aux organes de transformation;
la machine de transformation **caractérisée en ce que**
l'unité de traitement est programmée pour générer, en réponse à une commande entrée individuellement par l'opérateur, au moins deux signaux de réglage respectifs corrélés par une loi de réglage prédéterminée de façon à régler au moins deux paramètres réglables respectifs, de sorte que les organes de transformation correspondants induisent un changement de la grandeur caractéristique.

7. Machine selon la revendication 6, dans laquelle l'interface graphique de commande (20) comprend un écran tactile adapté pour transmettre à l'unité de traitement (22) une commande entrée individuellement par un appui d'un opérateur sur une zone de commande (24.1, 24.2, 26.1, 26.2, 28.1, 28.2) de l'écran tactile.

8. Machine selon la revendication 6 ou 7, comprenant en outre des actionneurs de réglage, chaque actionneur de réglage étant adapté pour régler au moins un paramètre réglable en réponse à un desdits signaux de réglage.

9. Machine selon l'une des revendications 6 à 8, dans laquelle l'unité de traitement (22) est configurée pour mémoriser plusieurs lois de réglage prédéterminées, de façon à régler plusieurs paramètres réglables respectifs, en particulier des paramètres réglables influençant diverses transformations, telles que le contraste d'une couleur, l'emplacement d'un motif de couleur sur l'élément en plaque, la profondeur d'un pli, l'emplacement des découpes, la taille des éléments en plaque, la qualité de pliage.

10. Programme d'ordinateur adapté pour être mémorisé dans une unité de traitement d'une machine de transformation selon l'une des revendications 6 à 9, le programme d'ordinateur comprenant des instructions codées qui, lorsque le programme d'ordinateur est exécuté par l'unité de traitement, réalise les étapes (102-104) du procédé de commande selon l'une des revendications 1 à 5.

## Patentansprüche

1. Verfahren zur Steuerung, um eine Verarbeitungsmaschine zu steuern, die dazu bestimmt ist, auf Plattenelemente (4) einzuwirken, die dazu bestimmt sind, Behälter zu bilden, wobei die Verarbeitungsmaschine mindestens umfasst:
- Verarbeitungselemente, die eingerichtet sind, um mindestens eine Aktion zu realisieren, die direkt oder indirekt eine Verarbeitung jedes Plattenelements (4) hervorruft, wobei jedes Verarbeitungselement so konfiguriert ist, dass es gemäß mindestens einem regelbaren Parameter arbeitet;
- eine grafische Steuerschnittstelle (20), die konfiguriert ist, um Steuerbereiche (24.1, 24.2, 26.1, 26.2, 28.1, 28.2) anzuzeigen, um es einem Bediener zu ermöglichen, Steuerbefehle individuell einzugeben;
- eine Verarbeitungseinheit (22), die mit der grafischen Steuerschnittstelle (20) und mit den Verarbeitungselementen verbunden ist;
wobei das Verfahren umfasst:
- einen Anzeigeschritt (102), in dem die graphische Steuerschnittstelle (20) mindestens ein Bild (21), das ein Plattenelement (4) oder einen Behälter darstellt, der durch ein Plattenelement gebildet ist, und Steuerbereiche (24.1, 24.2, 26.1, 26.2, 28.1, 28.2) anzeigt, die dem Bild (21) überlagert sind und die jeweils charakteristische Größen der Verarbeitungen symbolisieren, die auf jedem Plattenelement (4) hervorgerufen werden sollen;
- einen Empfangsschritt (103), in dem die Verarbeitungseinheit (22) einen der von dem Bediener einzeln eingegebenen Steuerbefehl durch Aktivieren eines Steuerbereichs (24.1, 24.2, 26.1, 26.2, 28.1, 28.2) empfängt;
**dadurch gekennzeichnet, dass** es umfasst:
- einen Steuerschritt (104), in dem die Verarbeitungseinheit (22) als Reaktion auf den individuell eingegebenen Steuerbefehl mindestens zwei entsprechende Regelungssignale erzeugt, die durch ein vorbestimmtes Regelungsgesetz korreliert sind, um mindestens zwei entsprechende regelbare Parameter zu regeln, so dass die entsprechenden Verarbeitungselemente eine Änderung der charakteristischen Größe hervorrufen.

2. Verfahren nach Anspruch 1, wobei die Verarbeitungselemente umfassen:
- einen drehbar angebrachten Aufnahmeträgerzylinder (6), der eingerichtet ist, eine Aufnahme zu tragen und angeordnet ist, um die Aufnahme auf jedem Plattenelement (4) so walzen zu lassen, dass eine Tintenmenge gemäß einem Muster deponiert wird, das auf der Aufnahme definiert ist;
- einen Rasterzylinder (8), der parallel zu dem Aufnahmeträgerzylinder (6) angeordnet ist, um die Tintenmenge von einem Tintenbehälter (12) aufzunehmen und die Tintenmenge zu dem Aufnahmeträgerzylinder (6) durch Kontakt mit dem Aufnahmeträgerzylinder (6) zu übertragen; und
- ein Gegendruckelement (10), das parallel zu dem Aufnahmeträgerzylinder (6) angeordnet ist, um Druckkräfte auf jedes Plattenelement (4) auszuüben, wobei er über den Aufnahmeträgerzylinder (6) walzt;
und wobei die Verarbeitungseinheit (22) mindestens zwei Regelungssignale erzeugt, die durch ein Kontrastgesetz sowie ein vorbestimmtes Regelungsgesetz korreliert sind, das dazu bestimmt ist, die auf jedem Plattenelement deponierte Tintenmenge anzupassen, wobei die regelbaren Parameter aus der Gruppe ausgewählt sind, die aus dem Abstand zwischen dem Aufnahmeträgerzylinder (6) und dem Rasterzylinder (8), dem Abstand zwischen dem Aufnahmeträgerzylinder (6) und dem Gegendruckelement (10), der Rotationsgeschwindigkeit des Aufnahmeträgerzylinders (6) sowie der Rotationsgeschwindigkeit des Rasterzylinders (8) besteht.

3. Verfahren nach einem der vorhergehenden Ansprüche, wobei die Verarbeitungselemente umfassen:
- Faltwalzen, die angeordnet sind, um mindestens eine Falte an jedem Plattenelement zu bilden;
- mindestens einen Walzenträger, der eingerichtet ist, die Faltwalzen zu tragen; und
- ein Gegendruckelement, das angeordnet ist, um Druckkräfte auf jedes Plattenelement in einer Richtung entgegengesetzt zu den Kräften auszuüben, die von den Faltwalzen ausgeübt werden;
und wobei die Verarbeitungseinheit (22) mindestens zwei Regelungssignale erzeugt, die durch ein Faltungsgesetz korreliert sind, das dazu bestimmt ist, die Tiefe einer Falte auf jedem Plattenelement anzupassen, wobei die regelbaren Parameter aus der Gruppe ausgewählt sind, die aus dem Festziehen der Faltwalzen auf der Falte, um den Behälter im gefalteten Zustand zu halten, der Position des Walzenträgers und dem Abstand zwischen dem Walzenträger und dem Gegendruckelement besteht.

4. Verfahren nach einem der vorhergehenden Ansprüche, ferner umfassend einen Rekonfigurationsschritt (106), in dem ein Bediener Konfigurationsmittel einsetzt, um mindestens ein vorbestimmtes Regelungsgesetz neu zu konfigurieren.

5. Verfahren nach einem der vorhergehenden Ansprüche, wobei die Verarbeitungsmaschine ferner eine Transportvorrichtung (5) umfasst, die eingerichtet ist, die Plattenelemente (4) nacheinander zu jedem Verarbeitungselement zu transportieren, so dass jedes Verarbeitungselement die Aktion realisieren kann, wobei das Steuerverfahren ferner einen vorherigen Stoppschritt (101) umfasst, in dem die Transportvorrichtung (5) gestoppt wird, bevor der Schritt ausgeführt wird, in dem die Verarbeitungseinheit (22) Regelungssignale erzeugt.

6. Verarbeitungsmaschine vom Typ Druckmaschine (1), die dazu bestimmt ist, auf Plattenelemente (4) einzuwirken, die dazu bestimmt sind, Behälter zu bilden, wobei die Verarbeitungsmaschine zumindest umfasst:
- Verarbeitungselemente, wobei jedes Verarbeitungselement eingerichtet ist, mindestens eine Aktion auszuführen, die direkt oder indirekt eine Verarbeitung jedes Plattenelements (4) hervorruft, wobei jedes Verarbeitungselement konfiguriert ist, um gemäß mindestens einem regelbaren Parameter zu arbeiten;
- eine grafische Steuerschnittstelle (20), die konfiguriert ist, um mindestens ein Bild (21) anzuzeigen, das ein Plattenelement (4) oder einen durch ein Plattenelement (4) gebildeten Behälter darstellt, und konfiguriert ist, um Steuerbereiche (24.1, 24.2, 26.1, 26.2, 28.1, 28.2) anzuzeigen, die dem Bild (21) überlagert sind und die jeweils charakteristische Größen der auf jedem Plattenelement (4) hervorzurufenden Verarbeitungen symbolisieren; und
- eine Verarbeitungseinheit (22), die mit der grafischen Steuerschnittstelle (20) und den Verarbeitungselementen verbunden ist;
wobei die Verarbeitungsmaschine **dadurch gekennzeichnet ist, dass** die Verarbeitungseinheit programmiert ist, um als Reaktion auf einen individuell vom Bediener eingegebenen Steuerbefehl mindestens zwei entsprechende Regelungssignale zu erzeugen, die durch ein vorbestimmtes Regelungsgesetz korreliert sind, um mindestens zwei entsprechende regelbare Parameter zu regeln, so dass die entsprechenden Verarbeitungselemente eine Änderung der charakteristischen Größe hervorrufen.

7. Maschine nach Anspruch 6, wobei die graphische Steuerschnittstelle (20) einen Berührungsbildschirm umfasst, der eingerichtet ist, an die Verarbeitungseinheit (22) einen Steuerbefehl, der individuell durch ein Drücken eines Bedieners auf einen Steuerbereich des Berührungsbildschirms (24.1, 24.2, 26.1, 26.2, 28.1, 28.2) eingegeben wird, zu senden.

8. Maschine nach Anspruch 6 oder 7, ferner umfassend Aktoren zum Regeln, wobei jeder Aktor zum Regeln eingerichtet ist, um mindestens einen regelbaren Parameter als Reaktion auf eines der Regelungssignale zu regeln.

9. Maschine nach einem der Ansprüche 6 bis 8, wobei die Verarbeitungseinheit (22) konfiguriert ist, mehrere vorgegebene Regelungsgesetze zu speichern, um so mehrere entsprechende regelbare Parameter, insbesondere regelbare Parameter, die verschiedene Verarbeitungen beeinflussen, wie den Kontrast einer Farbe, die Lage eines Farbmusters auf dem Plattenelement, die Tiefe einer Falte, die Lage der Schnitte, die Größe der Plattenelemente, die Qualität der Faltung zu regeln.

10. Computerprogramm, das eingerichtet ist, in einer Verarbeitungseinheit einer Verarbeitungsmaschine nach einem der Ansprüche 6 bis 9 gespeichert zu werden, wobei das Computerprogramm codierte Anweisungen umfasst, die, wenn das Computerprogramm von der Verarbeitungseinheit ausgeführt wird, die Schritte (102-104) des Verfahrens zur Steuerung nach einem der Ansprüche 1 bis 5 durchführt.

## Claims

1. Method of control, for controlling a transformation machine, intended to act on plate elements (4) intended to form containers, the transformation machine comprising at least:
- transformation members, adapted to produce at least one action, inducing, directly or indirectly, a transformation of each plate element (4), each transformation member being configured to function according to at least one adjustable parameter;
- a graphic control interface (20), configured to display control zones (24.1, 24.2, 26.1, 26.2, 28.1, 28.2) so as to enable an operator to individually enter controls; and
- a processing unit (22) connected to the graphic control interface (20) and to the transformation members;
the method comprising:
- a display step (102), wherein the graphic control interface (20) displays at least one image (21) representing a plate element (4) or a container formed by a plate element, and the control zones (24.1, 24.2, 26.1, 26.2, 28.1, 28.2) which are superimposed on the image (21) and which symbolise respectively the characteristic variables of the transformations to be induced on each plate element (4); and
- a receiving step (103), wherein the processing unit (22) receives one of the entry controls individually by the operator by activating a control zone (24.1, 24.2, 26.1, 26.2, 28.1, 28.2);
**characterised in that** it comprises:
- a control step (104), wherein, in response to the control entered individually, the processing unit (22) generates at least two respective adjustment signals, correlated by a predetermined adjustment rule, so as to adjust at least two respective adjustable parameters, such that the corresponding transformation members induce a change in the characteristic variable.

2. Method according to claim 1, wherein the transformation members comprise:
- a plate cylinder (6) mounted rotating, adapted to support a plate and arranged to make the plate roll over each plate element (4) so as to deposit a quantity of ink there according to a pattern defined on the plate;
- a screen cylinder (8) arranged parallel to the plate cylinder (6) so as to receive the quantity of ink from an ink reservoir (12) and to transfer the quantity of ink to the plate cylinder (6) by contact with the plate cylinder (6); and
- a counterpressure member (10) arranged parallel to the plate cylinder (6) so as to exert pressure forces on each plate element (4) rolling over the plate cylinder (6);
and wherein the processing unit (22) generates at least two adjustment signals correlated by a contrast rule, as a predetermined adjustment rule, intended to adjust the quantity of ink deposited on each plate element, the adjustable parameters being selected from the group constituted by the distance between the plate cylinder (6) and the screen cylinder (8), the distance between the plate cylinder (6) and the counterpressure member (10), the rotation speed of the plate cylinder (6), as well as the rotation speed of the screen cylinder (8).

3. Method according to one of the preceding claims, wherein the transformation members comprise:
- folding rollers arranged to form at least one fold on each plate element;
- at least one roller support adapted to support the folding rollers; and
- a counterpressure member arranged to exert pressure forces on each plate element in an opposite direction to the forces exerted by the folding rollers;
and wherein the processing unit (22) generates at least two adjustment signals correlated by a folding rule intended to adjust the depth of a fold on each plate element, the adjustable parameters being selected from the group constituted by the clamping of folding rollers on the fold so as to maintain the container in a folded state, the position of the roller support and the distance between the rollers and the counterpressure member.

4. Method according to one of the preceding claims, further comprising a reconfiguration step (106), wherein an operator implements the configuration means so as to reconfigure at least one predetermined adjustment rule.

5. Method according to one of the preceding claims, wherein the transformation machine further comprises a transport device (5) adapted to transport the plate elements (4) successively towards each transformation member, such that each transformation member can produce the action, the method of control further comprising a prior stopping step (101), wherein the transport device (5) is stopped before implementing the step wherein the processing unit (22) generates adjustment signals.

6. Transformation machine, of printing machine type (1), intended to act on the plate elements (4) intended to form containers, the transformation machine comprising at least:
- transformation members, each transformation member being adapted to produce at least one action inducing, directly or indirectly, a transformation of each plate element (4), each transformation member being configured to function according to at least one adjustable parameter;
- one graphic control interface (20), configured to display at least one image (21) representing a plate element (4) or a container formed by a plate element (4), and configured to display control zones (24.1, 24.2, 26.1, 26.2, 28.1, 28.2) which are superimposed on the image (21) and which symbolise respectively the characteristic variables of the transformations to induce each plate element (4); and
- a processing unit (22) connected to the graphic control interface (20) and to the transformation members;
the transformation machine **characterised in that** the processing unit is programmed to generate, in response to a control entered individually by the operator, at least two respective adjustment signals correlated by a predetermined adjustment rule so as to adjust at least two respective adjustable parameters, such that the corresponding transformation members induce a change in the characteristic variable.

7. Machine according to claim 6, wherein the graphic control interface (20) comprises a touchscreen adapted to transmit to the processing unit (22) a control entered individually by a press of an operator on a control zone (24.1, 24.2, 26.1, 26.2, 28.1, 28.2) of the touchscreen.

8. Machine according to claim 6 or 7, further comprising adjustment actuators, each adjustment actuator being adapted to adjust at least one adjustable parameter in response to one of said adjustment signals.

9. Machine according to one of claims 6 to 8, wherein the processing unit (22) is configured to memorise several predetermined adjustment rules, so as to adjust several respective adjustable parameters, in particular, adjustable parameters influencing various transformations, such as the contrast of a colour, the placement of a colour pattern on a plate element, the depth of a fold, the placement of cuts, the size of the plate elements, the folding quality.

10. Computer program adapted to be memorised in a processing unit of a transformation machine according to one of claims 6 to 9, the computer program comprising coded instructions which, when the computer program is executed by the processing unit, carries out steps (102-104) of the method of control according to one of claims 1 to 5.
